# EUROPEAN PATENT APPLICATION

(11) **EP 1 777 651 A1**
(43) Date of publication of application: **25.04.2007**
(21) Application number: 06020569.7
(22) Date of filing: 29.09.2006
(51) Int. Cl.: G06Q 10/00, H04L 9/00, H04L 29/06

(54) **Electronic data delivery method**

(30) Priority: 12.10.2005 JP 2005297079; 16.12.2005 JP 2005362592
(71) Applicant: Hitachi, Ltd., Tokyo 100-8280 (JP)
(72) Inventor: Tanimoto, Koichi Hitachi, Ltd., Chiyoda-ku Tokyo 100-8220 (JP); Hirakawa, Tomohiro Hitachi, Ltd., Chiyoda-ku Tokyo 100-8220 (JP); Kumamoto, Masahiro Hitachi, Ltd., Chiyoda-ku Tokyo 100-8220 (JP); Taniguchi, Kazuhiko Hitachi, Ltd., Chiyoda-ku Tokyo 100-8220 (JP)
(74) Representative: Strehl Schübel-Hopf & Partner

(57) **Abstract**

Electronic data is delivered by using the secret sharing method. A transmission source device (210) divides the electronic data into a predetermined number of partial data by using the secret sharing method and creates an arbitrary number of auxiliary data corresponding to the predetermined number of partial data and having information required for calculating the total number of the auxiliary data and the partial data. These are transmitted to a transmission destination device (240) as a transmission destination of the electronic data via a network (250). The transmission destination device (240) stores reception data containing a plurality of partial data and the auxiliary data in a storage device and restores the electronic data as the source data before the division from the partial data if the partial data and the auxiliary data has not been tampered.

## Description

### BACKGROUND OF THE INVENTION

The present invention relates to a technique for handling electronic data by using a so-called secret sharing scheme (method) and in particular, to a technique for delivering electronic data including an electronic mail.

There is a secret sharing method as a technique for enhancing the safety of electronic data during delivery and storage. This method divides electronic data into partial data each having no meaning and restoring the original electronic data by arranging a predetermined number (or all) of the partial data by a particular program.

The secret sharing method is disclosed, for example, in JP-A-2004-53969. JP-A-2004-53969 describes a technique for easily generating highly safe and reliable electronic tallies. For this, JP-A-2004-53969 reads out a plain text as data to be handled, compresses/encodes it to generate an encoded word by eliminating a redundant bit pattern, cuts it into K elements, distributes and stores each element into M tally files on the basis of random numbers, records the distribution method on an element assigning table, divides the element assigning table into M pieces to be added as a closed header to the tally file, and adds an arrangement list of division pieces of the element assigning table distributed to the closed header for every tally file as an open header to the tally file, thereby generating the electronic tally in the tally file to be outputted when required.

Moreover, a technique for delivering electronic data via a network by using the secret sharing method is disclosed in JP-A-2003-132229 and JP-A-2003-132234. In JP-A-2003-132229, a server divides electronic data into first and second tally information, and transmits the first tally information via a first communication path to a center machine and the second tally information via a second communication path to a client. The client has a description to acquire the first tally information and integrate it with the second tally information to restore the original electronic data. Moreover, it has a description to define the information required for restoration in an assignment correspondence table T. Moreover, JP-A-2003-132234describes transmission of a plurality of electronic tallies by using different communication means (including different times) from the server machine directly to the user machine without passing through the center machine. It should be noted that the different times includes the transmission through the same communication path (see paragraph 0025).

### SUMMARY OF THE INVENTION

JP-A-2004-53969 studies the algorithm of the secret sharing method in details but hardly considers the delivery of electronic data via a network. Accordingly, for example, there remains a problem of delivery on the network that if the partial data divided are tampered on the network, the electronic data cannot be restored. Moreover, JP-A-2003-132229 and JP-A-2003-132234 describe delivery by using a network but does not consider the problem that if tampering is performed on the network, the original data before division cannot be restored.

To cope with this, the present invention delivers an arbitrary number of auxiliary data together with partial data obtained by dividing electronic data by the secret sharing method. Here, each of the partial data and each of the auxiliary data may include information for identifying other partial data to be restored and other auxiliary data. Furthermore, it may include information required for calculating the total number of the partial data and the auxiliary data.

As a specific aspect, the present invention includes the following configuration. In an electronic data delivery method for delivering electronic data by using the secret sharing method: a transmission source device which is a transmission source of the electronic data divides the electronic data into a predetermined number of partial data; the transmission source device creates an arbitrary number of auxiliary data corresponding to the predetermined number of partial data and containing information indicating number information indicating a total number of the auxiliary data and the partial data; the transmission source device transmits the partial data and the auxiliary data to a transmission destination device as a transmission destination of the electronic data via a network; the transmission destination device receives the partial data and the auxiliary data; the transmission destination device stores the reception data including the partial data and the auxiliary data in a storage device; the transmission destination device detects presence/absence of tamper of the partial data and the auxiliary data by using the attribute data; and the transmission destination device restores the electronic data from the partial data.

Moreover, the present invention includes the electronic data delivery method, wherein the transmission source device divides the electronic data into two or more partial data.

Furthermore, the present invention includes the electronic data delivery method, wherein the transmission source device create at least one of the auxiliary data.

Moreover, the present invention includes the electronic data delivery method, wherein the transmission destination device detects presence/absence of tamper by using information for identifying other partial data and other auxiliary data as the restoration objects and information on encoded partial data.

Furthermore, the present invention includes the electronic data delivery method, wherein each of the transmission source device and the transmission destination device stores a predetermined information string and inserts codes constituting the information string into a predetermined position of data for each of the partial data and the auxiliary data according to a predetermined rule; and the transmission destination device collects the codes to constitute the information string and compares it with an information string stored in advance, thereby detecting presence/absence of tamper of the partial data and the auxiliary data.

Furthermore, the present invention includes the electronic data delivery method, wherein the transmission source device successively transmits the partial data and the auxiliary data at a predetermined time interval, so as to increase the possibility that the partial data and the auxiliary data are transmitted via different communication paths.

It should be noted that the present invention includes the electronic data delivery method, wherein the transmission source device transmits the partial data and the auxiliary data at an interval, for example, not smaller than 30 seconds and not greater than 3 minutes.

Moreover, the present invention includes the electronic data delivery method, wherein the transmission source device transmits a part of the plurality of divided partial data and the auxiliary data to a mediation device other than the transmission destination device and the other part to the transmission destination device; and the transmission destination device accesses the mediation device, downloads the partial data or the auxiliary data which has been transmitted to the mediation device, and restores the electronic data from the downloaded partial data and the auxiliary data, and the partial data and the auxiliary data which have been transmitted to the transmission destination device. As an aspect of this invention, the following are also included in the present invention.

An electronic data delivery method for delivering electronic data by using the secret sharing method, wherein: a transmission source device as a transmission source of the electronic data divides the electronic data into a partial data group having a predetermined number of partial data by using the secret sharing method; the transmission source device classifies the partial data group into a first partial data group and a second partial data group; the transmission source device creates auxiliary data for restoring the electronic data from the partial data of the partial data group corresponding to the partial data of the first partial data group, the auxiliary data including positional relationship information associated with a storage position of the second partial data group; the transmission source device transmits the auxiliary data and the first partial data group to a transmission destination device as a transmission destination of the electronic data via a network, and the second partial data group to a data server via the network; the transmission destination device receives the first partial data group and the auxiliary data; the transmission destination device specifies a storage position of the second partial data group by using the auxiliary data; the transmission destination device accesses the specified storage position and reads the partial data of the second partial data group from the data server; and the transmission destination device restores the electronic data from the partial data of the second partial data group which has been read in and the partial data of the received first partial data group by using the auxiliary data.

Moreover, the present invention includes the processing in which the transmission source device creates the auxiliary data of the number corresponding to the first partial data. Furthermore, in this processing, the transmission source device correlates each of partial data of the first partial data group to each of the auxiliary data created and transmits them to the transmission destination device.

Furthermore, the present invention also includes that the transmission destination device creates position information indicating the storage position of the second partial data group from the position relationship information by combining the auxiliary data. Here, the position information is URL.

Moreover, the present invention also includes that the second partial data group is formed by one partial data.

Furthermore, the present invention also includes that the transmission source device creates auxiliary data containing information indicating the total number of the auxiliary data and the partial data as the auxiliary data, and the transmission destination device detects presence/absence of tamper of the partial data and the auxiliary data by using the auxiliary data. Here, the transmission destination device executes restoration of the electronic data if no tamper is detected.

It should be noted that the present invention also includes a program for causing a computer to execute the aforementioned processes, a storage medium containing the program, and a method thereof.

The present invention enables safe electronic data delivery with a simple system configuration.

Other objects, features and advantages of the invention will become apparent from the following description of the embodiments of the invention taken in conjunction with the accompanying drawings.

### BRIEF DESCRIPTION OF THE DRAWINGS

Fig. 1 is a flowchart of an outline of a processing flow showing a basic flow for carrying out the present invention;
Fig. 2 is a block diagram showing an electronic data delivery system;
Fig. 3 is a diagram showing an input screen of a mail from a transmission source device;
Fig. 4 is a flowchart showing a mail division processing flow;
Figs. 5A and 5B are diagrams showing outlines of a partial mail and an auxiliary mail, respectively;
Fig. 6 is a flowchart showing a processing for checking whether or not tampering has been performed;
Fig. 7 is a flowchart showing a mail restoration processing;
Fig. 8 is a flowchart showing a basic flow for carrying out a second embodiment of the present invention;
Fig. 9 is a block diagram of the electronic data delivery system according to the second embodiment of the present invention;
Fig. 10 is a flowchart showing a mail division processing in the second embodiment;
Fig. 11 is a flowchart showing a processing for acquisition of the second partial mail group and tamper check in the second embodiment; and
Fig. 12 is a flowchart showing a mail restoration processing in the second embodiment.

### DESCRIPTION OF THE EMBODIMENTS

Description will now be directed to embodiments (a first embodiment) of the present invention in an example of electronic data delivery using an electronic mail with reference to the attached drawings.

Hereinafter, explanation will be given on the processing content of the first embodiment.

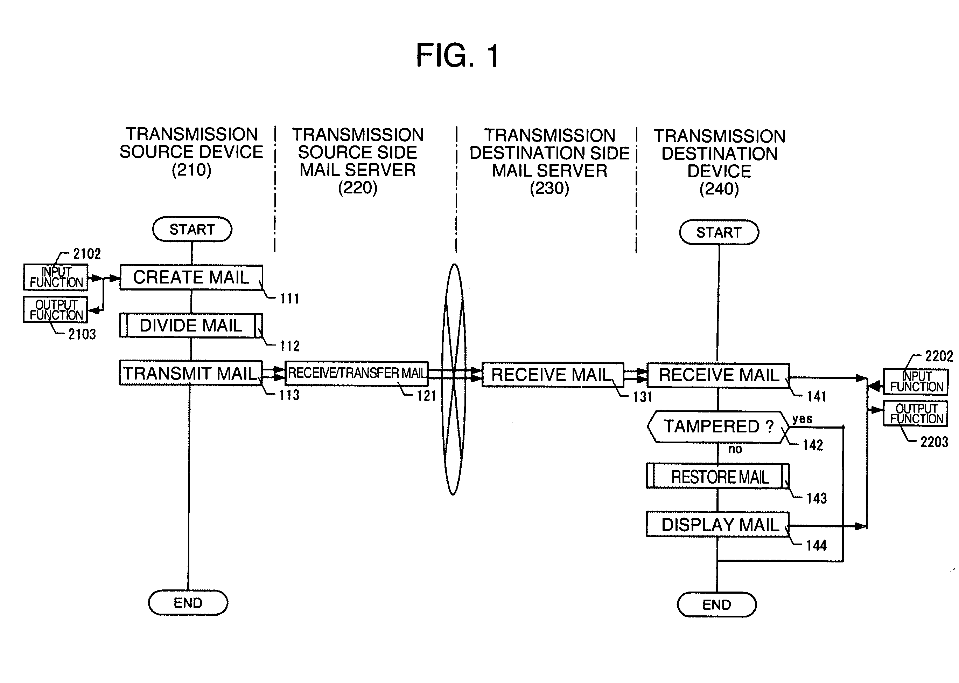

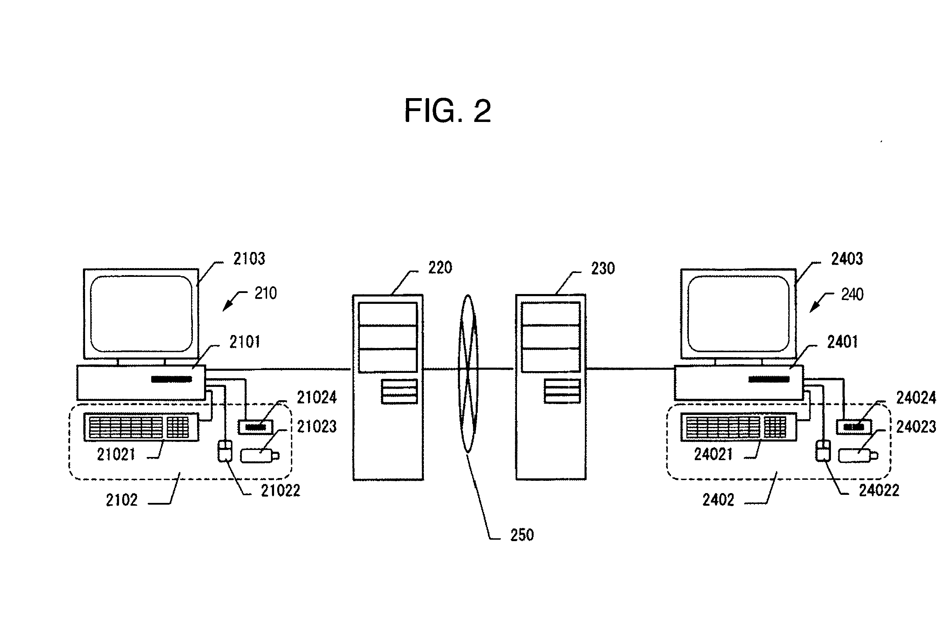

Fig. 1 shows a processing flow according to the first embodiment of the present invention. Fig. 2 is a block diagram of an electronic data delivery system including device configuration for realizing the present embodiment.

Firstly, explanation will be given on the block diagram of the electronic data delivery system shown in Fig. 2. The electronic data delivery system includes a transmission source device 210, a transmission source side mail server 220, a transmission destination side mail server 230, and a transmission destination device 240 which are connected via a communication network 250.

### (1) Device configuration of transmission source device 210

The transmission source device 210 is a device used when a use who transmits a mail inputs various information on the electronic mail as a transmission object. For example, the device may be a personal computer, a mobile telephone having a mail delivery function, a PDA (mobile information terminal), and the like. The device may be a fixed type or a mobile type.

The transmission source device 210 is formed by functions such as a control function 2101, an input function 2102, an output function 2103, and a communication function 2104. The respective functions perform processes in accordance with the processing content of the transmission source device 210 in cooperation with each other. The input function 2102 is configured by a keyboard 21021, a mouse 21022, a USB memory 21023, and the like. The USB memory 21023 contains information for identifying a transmitter/receiver (a mail address of a transmitter/receiver, ID of a transmitter/receiver). The transmission source device 210 includes a memory, a storage device including a hard disk, and a processing device such as a CPU. The processing device executes information processing according to a program stored in the storage device.

The transmitter/receiver ID stored in the USB memory 21023 is used for identifying both of the transmitter and the receiver according to the mail addresses of the transmitter and the receiver. Normally, when transmitting a mail, delivery between mail servers is performed according to the mail address described in a mail header portion, but the transmitter/receiver ID is internal information described in a mail body portion for identifying the mail transmitter/receiver. It should be noted that it is preferable that the transmitter/receiver ID be stored in an unrewritable area in the USB memory or in a rewritable area which requires a special device when performing rewrite so that the ID is not easily modified.

### (2) Device configuration of transmission source side mail server 220 and transmission destination side mail server 230

The transmission source side mail server 220 and the transmission destination side mail server 230 operate as mediation devices when a mail is delivered between the transmission source device 210 and the transmission destination device 240 and are configured by a control function, an input function, an output function, a communication function, and the like.

It should be noted that when a mail is delivered in the same enterprise or department or provider, the transmission source side mail server 220 and the transmission destination side mail server 230 may be a single device.

### (3) Device configuration of transmission destination device 240

The transmission destination device 240 is a device used when inputting/outputting various information on an electronic mail as a reception object. Like the transmission source device 210, the transmission destination device 240 may be, for example, a personal computer or a mobile telephone having the mail delivery function. The transmission destination device 240 is configured basically in the same way as the transmission source device 210 and the details are omitted.

### (4) Device configuration of communication network 250

The communication network 250 for executing communication between the transmission source device 210, the transmission source side mail server (mediation device) 220, the transmission destination side mail server (mediation device) 230, and the transmission destination device 240 is dedicated line or a communication line such as the Internet and may be either wired or wireless.

Next, explanation will be given on the process operation in this embodiment according to the processing flow of Fig. 1 with reference to Fig. 2.

### (1) Process operation of transmission source device 21

Various information on the electronic mail as a transmission object (input of mail destination, text body, attached file, selection of buttons on the screen) are inputted through the input function 2102 to create a mail (step 111).

The created mail is divided into a plurality of mails by generating a plurality of tally data by using the secret sharing method (step 112).

A plurality of electronic mails (partial mails and auxiliary mails) having various information required for delivering the original mail described in a mail header portion and a body portion are created and transmitted via the communication network 250 to the transmission source side mail server 220 (step 113).

### (2) Process operation of transmission source side mail server 220

The electronic mail transmitted from the transmission source device 210 is received and then the received mail is transferred to the transmission destination side mail server (step 121).

### (3) Process operation of transmission destination side mail server 230

The electronic mail transmitted from the transmission source side mail server 220 is received (step 1311).

### (4) Process operation of transmission destination device 240

Various information on the electronic mail as a reception object (information on the mail receiver, selection of a button on the screen) are inputted from the input function 2102 to perform reception of a plurality of mails (step 141).

Check is made to decide whether the received mails have been tampered (step 142)

If no tamper is found, the mails are restored (step 143). If tamper is found, the processing is terminated. The restored mails are displayed on the output device 2403 (step 113).

Hereinafter, detailed explanation will be given on a part of the respective processing steps of the embodiment.

### [Transmission source device 210: step 111]

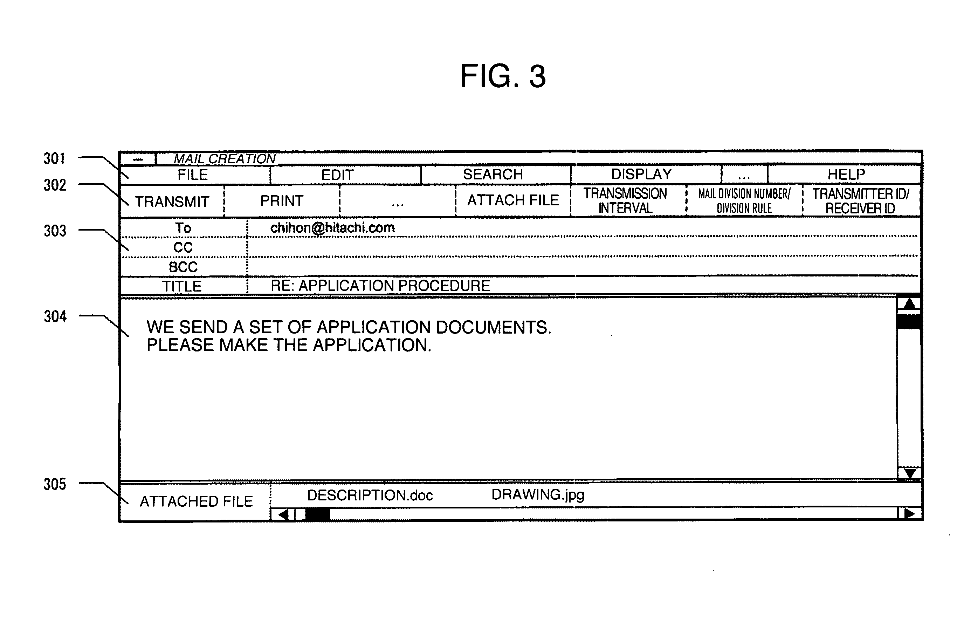

Fig. 3 shows an input screen of a mail from the transmission source device 210. The screen of the output device 2103 is divided into four areas: a basic menu selection area 301 for receiving input of a processing type concerning mail creation, storage, display, and the like; an edition menu selection area 302 for receiving a processing type concerning edition of the mail as a transmission object; a header information input area 303 for receiving input of a destination, a title, and the like; a text input area 304 for receiving input of the mail text; and an attached file display area 305 for displaying a list of attached files to be attached to mails.

A user inputs various information concerning the mail as the transmission object into the transmission header information input area 303 and the text input area 304, presses an attached file button in the edition menu selection area 302 , if required, to select an attached file, and inputs information concerning mail division (the number of mails divided, the division rule, and the like) and information concerning the transmission interval, total numbers of the partial mails and auxiliary mails. Here, the division rule defines a rule when dividing the mail into a plurality of partial mails. The rule is used, for example, when dividing the size of the entire division mail into a particular size or when the attached file size is too large, for dividing the mail into a division mail containing the text portion as a main part and a division mail containing an attached file portion as a main part.

### [Transmission source device 210: step 112]

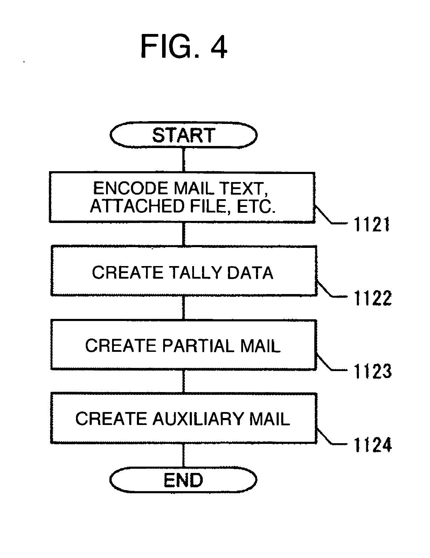

Fig. 4 shows a mail division processing flow.

Encoding is performed to convert the mail text of the original mail and the attached file into tallies. Normally, the text portion of the original mail describes the information in text format and the attached file portion is encoded by the encoding method such as BASE64. Here, the secret sharing method is used to tally-encode information such as the text and the attached file and accordingly, a code string is generated (encoded) by a particular encoding method. The encoding algorithm is stored in mail software (step 1121).

The secret sharing method is used to tally-encode the code string to generate tally data. Here the total number of tally data to be generated and the tally data size are the numeric values inputted in step 111. Moreover, the tally encoding algorithm by the secret sharing method is stored in mail software (step 1122).

In the mail body portion, a partial mail is generated to contain tally data obtained by performing the tally-encoding, a transmitter ID, a receiver ID, a division mail ID, a pair data ID identifying partial data other than the partial data, and the like. In the header portion of the mail, a transmitter address, a receiver address, a title, and the like used in the normal mail delivery are described (step 11223).

In the mail body portion, there is generated an auxiliary mail containing an information string concerning the respective tally data (such as a message digest calculated by Hash function), a transmitter ID, a receiver ID, a divided mail ID, pair data ID for identifying auxiliary data other than the auxiliary data, and the like. The mail header portion describes a transmitter address, a receiver address, a title, and the like normally used in the mail delivery.

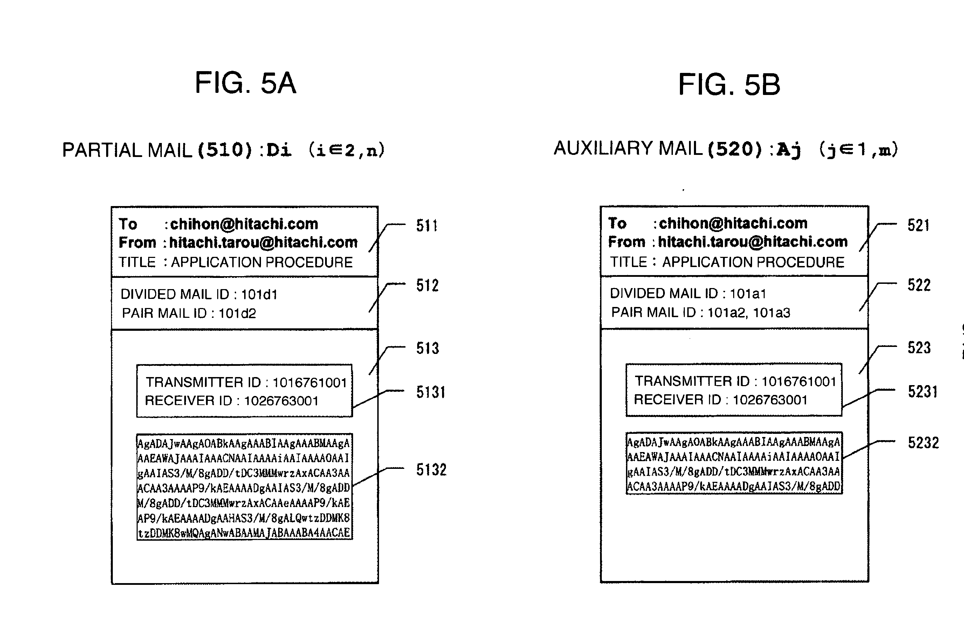

Figs. 5A and 5B show outlines of the partial mail 510 and the auxiliary mail 520, respectively.

The partial mail 510 includes: an area 512 for describing the header information 511 required for delivery between mail servers, divided mail ID, and pair mail ID indicating a partial mail other than the partial mail, and the like; and an area 513 for describing the respective tally data and transmitter ID and receiver ID.

The auxiliary mail 520 includes: an area 522 describing the header information 521 required for delivery between mail servers, a divided mail ID, a pair mail ID indicating an auxiliary mail other than the auxiliary mail, and the like; and an area 513 describing the information string concerning the respective tally data, the transmitter ID, the receiver ID, and the like.

It should be noted that in the explanation of step 1121 and step 1122, the object of tally encryption by the secret sharing method is the text body portion of the original mail and the attached file portion. However, the transmitter ID, the receiver ID, the divided mail ID, and the pair mail ID may also be made objects of the tally encryption. In this case, slight modification is caused in the detailed portion of the processing flow of the divided mail tamper check (step 142) and the mail restoration (step 143) but the outline of the flow is not affected.

### [Transmission destination device 240: step 142]

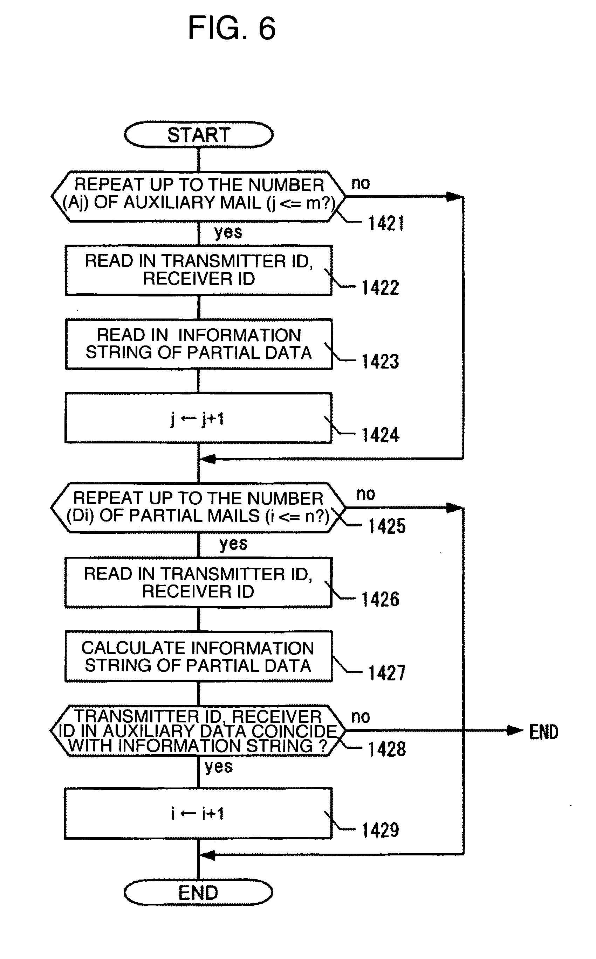

Fig. 6 is a flowchart of the tamper check in the transmission destination device 240.

Mail read is performed by the number of auxiliary mails (here, m times) (step 1421). The transmitter ID and the receiver ID described in each auxiliary mail is read in (step 1422).

An information string concerning the respective tally data in the respective auxiliary mails is read in (step 1423). Control is repeatedly passed to step 1425 until no auxiliary mail to be read exists (step 1424).

Mail read is performed by the number of partial mails (here, n times) (step 1425). The transmitter ID and the receiver ID described in each of the partial mails are read in (step 1426).

A corresponding information string is calculated from tally data in each partial mail. The calculation is performed by using the same algorithm used in step 1124 (step 1427).

The calculated information string is checked whether it coincides with the transmitter ID and the receiver ID in the auxiliary data, and the information string corresponding to the respective tally data (step 1428). If they coincide, control is passed to step 1428. If they do not coincide, the processing is terminated (step 1428). The processing is repeated until no mail to be read in exists (step 1429).

### [Transmission destination device 240: step 143]

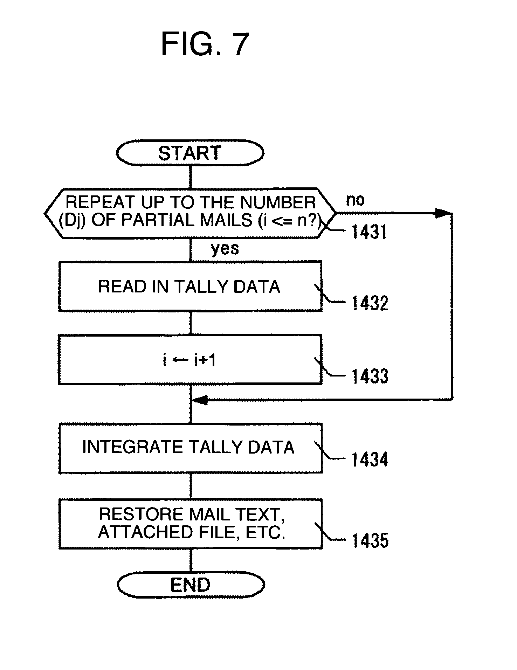

Fig. 7 is a flowchart showing an outline of restoration flow of the original mail in the transmission destination device.

Mail read is performed up to the number of partial mails (n in this case) (step 1431). Tally data of each of partial mails is read into the storage device (step 1432). The process is repeated for each of the objects to be read in (step 1433).

The tally data which have been read in are integrated by using the algorithm used in the secret sharing method. The tally decryption algorithm by the secret sharing method is stored in mail software (step 1434).

The integrated data (encoded string) is decoded to restore the data including the mail text and the attached file. The algorithm required for the decoding is stored in the mail software (step 1435).

As has been described above, according to the present embodiment, when electronic data is delivered via a network, the electronic data is divided into a plurality of mails by using the algorithm of the secret sharing method, thereby lowing the danger of wiretap and restoration during delivery. Furthermore, even if an operation such as tamper is performed on the network, the tamper can be easily detected.

It should be noted that in this embodiment, explanation has been given on a case that the transmission destination of the divided electronic mails is a single transmission destination device. However, it is also possible to transmit electronic mails to a plurality of transmission destination devices by considering the characteristics of the original mail (presence/absence and size of the attached file, environment of the receiver side, etc.). For example, when the attached file is image data like a design drawing or a music file, the partial mail containing the text portion of the original mail (describing the outline of the attached file and the instruction content, for example) and the auxiliary mail may be transmitted to the transmission destination device (mail server) shown in the embodiment while the partial mail containing the attached file portion of the original mail may be transmitted to a server other than the transmission destination device. This will be detailed below as a second embodiment.

Explanation will be given on the second embodiment in which at least one of the partial data (partial data obtained by dividing a mail and a file by the secret sharing method) is transmitted to a server other than the transmission destination device.

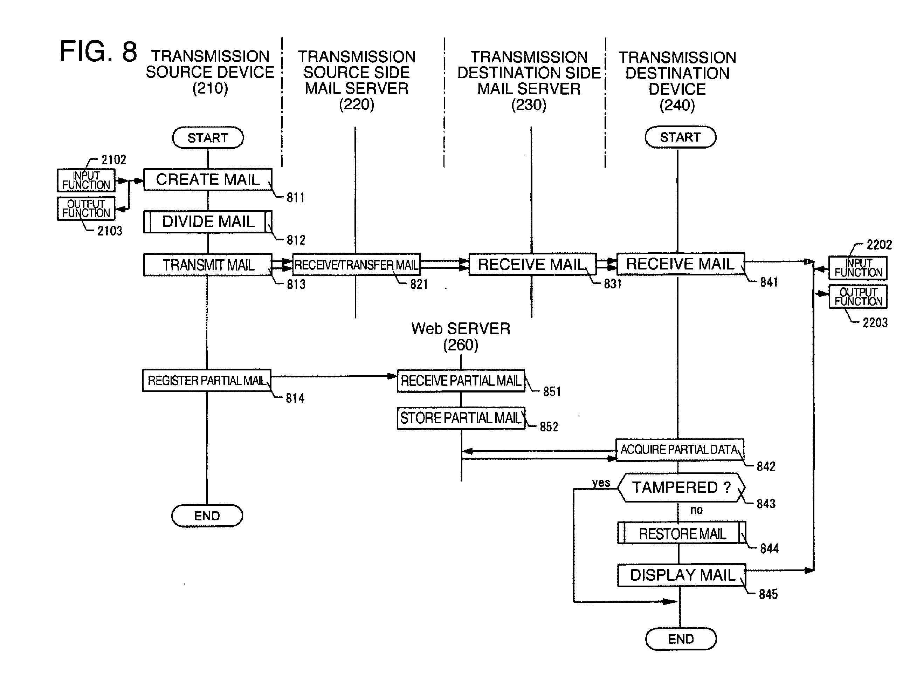

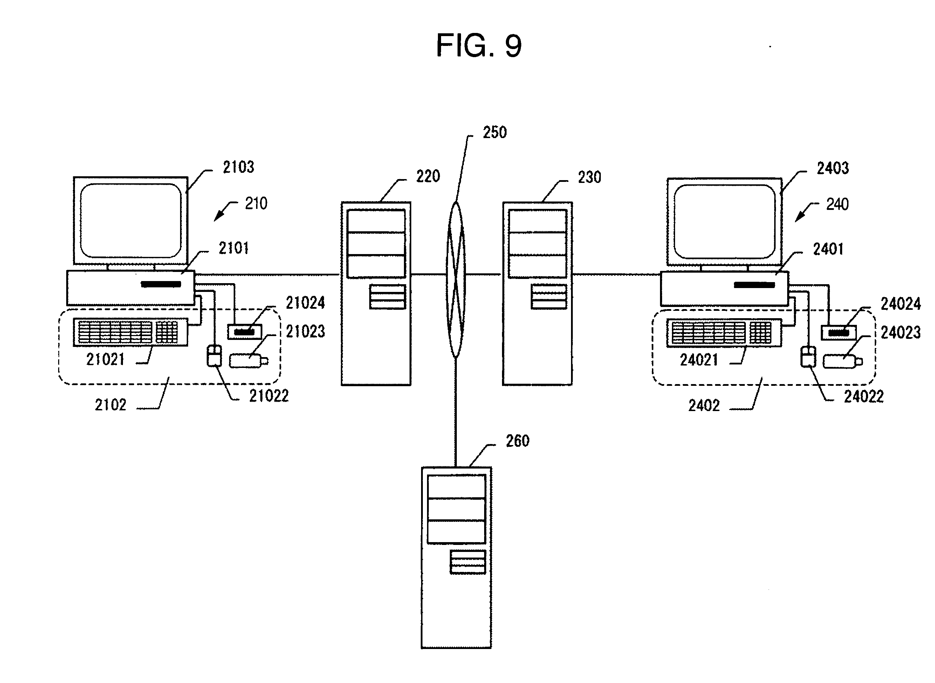

Fig. 8 is process flow diagram showing the second embodiment of the present invention. Fig. 9 is a block diagram showing an entire electronic data delivery system including the device configuration for realizing the second embodiment.

Firstly, explanation will be given on the block diagram of the entire electronic data delivery system shown in Fig. 9. The electronic data delivery system includes the transmission source device 210, the transmission source side mails server 220, the transmission destination side mail server 230, the transmission destination device 240, and a Web server 260 which are connected to one another via a communication network 250.

The device configurations of the transmission source device 210, the transmission source side mail server 220, the transmission destination side mail server 230, and the transmission destination device 240 have been explained in the first embodiment and their explanations are omitted here.

The Web server 260 is a device for storing partial data created by the transmission source device. The Web server 260 includes a partial data storage area and is formed by a control function, an input function, an output function, and the like.

The communication network 250 for performing communication between the transmission source device 210, the transmission source side mail server 220, the transmission destination side mail server 230, the transmission destination device 2450, and the Web server 260 may be a dedicated line or a communication line such as the Internet and may be wired or wireless.

Next, referring to Fig. 9, explanation will be given on the process operation in the present embodiment according to the processing flow of Fig. 8.

### (1) Process operation of transmission source device 210

The input function 2102 receives input of various information concerning the electronic mail as a transmission object in accordance with the operation by a user (input of a mail destination, a text main body, an attached file, and the like, selection of a button on the screen, etc.). The control function creates a mail based on the contents (step 811). The processing details are identical to the aforementioned step 111.

From the created mail, a plurality of tally data are created by using the secret sharing method, thereby dividing the mail into a plurality of mails (partial mails). Next, the created partial mails are divided into a first partial mail group (n partial mails in this case) to be transmitted to the transmission destination device 240 and a second partial mail group (s partial mails in this case) to be transmitted to the Web server 260. Moreover, at least one auxiliary (m auxiliary mails in this case) are created by containing shared information required for detecting tamper, shared information required for restoring the original mail from the partial mails including the number of divisions, and shared information concerning the storage position (URL or the like) of the second partial mail group (step 812). Here, the storage position may be decided for each of the transmission source devices in advance or may be decided by specification of the transmission source device. Moreover, the storage position of the second partial data group may be described in an area 513 of the first partial mail group or may be divided into two descriptions in the area 513 of the first partial mail group and an area 523 of the auxiliary mail.

A plurality of electronic mails containing various information required for delivery between the transmission source device 210 and the transmission destination device 240 which are described in the header portion and the body portion (the first partial mail group and the auxiliary mail group created in step 812) are transmitted to the transmission source side mail server 220 via the communication network 250 (step 813).

The second partial mail group created in step 812 is transmitted to the Web server 260 via the communication network 250 (step 814). It should be noted that step 814 also transmit information requesting storage in the storage position specified in step 812.

It should be noted that in creation of the partial mails, it is possible to create a partial mail from the mail text and the attached file as one data set by using the secret sharing method or separate the mail text from the attached file and create a partial mail and a partial file by using the secret sharing method, respectively. When processing the mail text separately and the attached file separately from each other, it is possible to divide the attached file by using the secret sharing method into a first partial file group and a second partial file group and transmit/store the second partial file group to the Web server 260 before (or after) the mail transmission of step 813. When the mail text and the attached file are processed separately, the transmission destination device may restore only the mail text and after checking the message, acquires the second partial file of the attached file into the Web server 260.

### (2) Process operation of transmission source side mail server 220

The transmission source side mail server 220 receives the electronic mail transmitted from the transmission source device 210 and transfers the received mail to the transmission destination side mail server (step 821).

### (3) Process operation of transmission destination side mail server 230

The transmission destination side mail server 230 receives the electronic mail transmitted from the transmission source side mail server 220 (step 821).

### (4) Process operation of Web server 260

The Web server 260 receives the second partial mail group from the transmission source device 210 (step 851).

The received second partial mail group is stored in a predetermined position. The storage position is based on the information transmitted in step 814, i.e., the storage position specified in step 812.

It should be noted that the transmission source device 210 may access the storage region of the Web server 260 (for example, direct access is performed) and store the second partial mail group. In this case, step 851 and step 852 may be executed as the same step.

### (5) Process operation of transmission destination device 240

The transmission destination device 240 receives input of various information concerning the electronic mail as a reception object in accordance with the operation by the user (information on the mail receiver, selection of a button on the screen, and the like) (step 841).

When the auxiliary mail group acquired in step 841 contains information on the storage position of the second partial mail group, the Web server 260 is accessed according to the information to acquire the second partial mail group (step 842).

Check is made to decide whether the received first partial mail group and the acquired second partial mail group has been tampered (step 843). If no tamper is detected, the mail is restored. If a tamper is detected, the processing is terminated (step 844). The restored mail is displayed on the output device 24403 (step 845).

It should be noted that when the transmission source device separately processes the mail text and the attached file (when a partial mail group and a partial file group are created), it is possible to perform a check whether the partial mail group has been tampered, before step 842 is performed, after which the mail text is restored and confirmed. In this case, after the confirmation, control is passed to step 842 where the Web server 260 is accessed according to the information on the storage position of the second partial file group contained in the auxiliary mail so as to acquire the second partial file group. Then, step 843 checks whether the second partial file group has been tampered and step 844 restores the attached file.

Hereinafter, detailed explanation will be given on a part of the respective processing steps of the present embodiment.

### [Transmission source device 210: step 812]

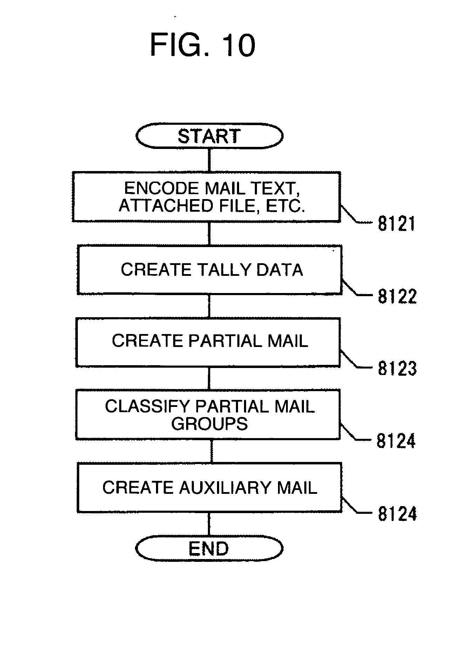

Fig. 10 shows a mail division processing flow in the embodiment.

Encoding is performed to convert the mail text of the original mail and the attached file into tallies. Normally, the text portion of the original mail describes information in a text format and the attached file portion is encoded by the encoding method such as BASE64. Here, information including the text and the attached file is tally-encoded by the secret sharing method and accordingly, a code string is generated (encoded) by a particular encoding method. The encoding algorithm is stored in the mail software (step 8121).

The code string is tally-encoded by using the secret sharing method to generate tally data. Here, the total number of the tally data and its size are defined by the numeric values inputted in step 811. Moreover, the tally-encoding algorithm by the secret sharing method is stored in the mail software (step 8122).

In the mail body portion, there is generated a partial mail group (consisting of at least one partial mail) containing the tally-encrypted tally data and a transmitter ID, a receiver ID, a divided mail ID, pair data ID for identifying partial data other than the partial data. The mail header portion describes a transmitter address, a receiver address, a title, and the like (step 8123).

The created partial mail groups are divided into a first partial mail group (consisting of at least one partial mail) to be transmitted to the transmission destination device 240 and a second partial mail group (consisting of at least one partial mail) to be transmitted to the Web server 260. More specifically, a management table containing the divided mail ID described in each partial mail and the distribution information (first or second) is created. Here, the number of the first partial mail groups and the second partial mail groups may be added to the edition menu of the input screen in Fig. 3 so that they are set there or they may be described in the setting file in advance, which are read in for setting (step 8124).

As shown in Fig. 5A, the first partial mail group has a configuration having header information 511 required for delivery between mail servers, a region 512 for describing the divided mail ID and a pair mail ID indicating a partial mail other than the partial mail, and a region 513 for describing the each tally data and transmitter ID and the receiver ID. The second partial mail group may have a configuration identical to the first partial mail or a configuration excluding the header information 511.

In the mail body portion, there are generated an information string concerning each tally data (such as a message digest calculated by Hash function), information on the storage position of the second partial mail group, information required for restoring the original mail from the partial mails such as the number of divisions, and at least one auxiliary mail containing the transmitter ID, the receiver ID, the divided mail ID, pair data ID for identifying an auxiliary mail other than that auxiliary mail, and the like. The mail header portion describes the transmitter address, the receiver address, the title, and the like used for normal mail delivery. Here, the storage position of the second partial mail group to be stored in the auxiliary mail may be added to the edition menu of the input screen in Fig. 3 so as to set it there or may be described in the setting file in advance, which is read in to be set (step 8125).

As shown in Fig. 5B, the auxiliary mail has a configuration having header information 521 required for delivery between mail servers, a region 522 describing the divided mail ID and the pair mail ID indicating an auxiliary mail other that auxiliary mail, and a region 513 for describing an information string concerning each tally data, information on the storage position of the second partial mail group, information required for restoring the original mail from the partial mails such as the number of divisions, the transmitter ID, the receiver ID, and the like.

### [Transmission destination device 240: step 842, step 843]

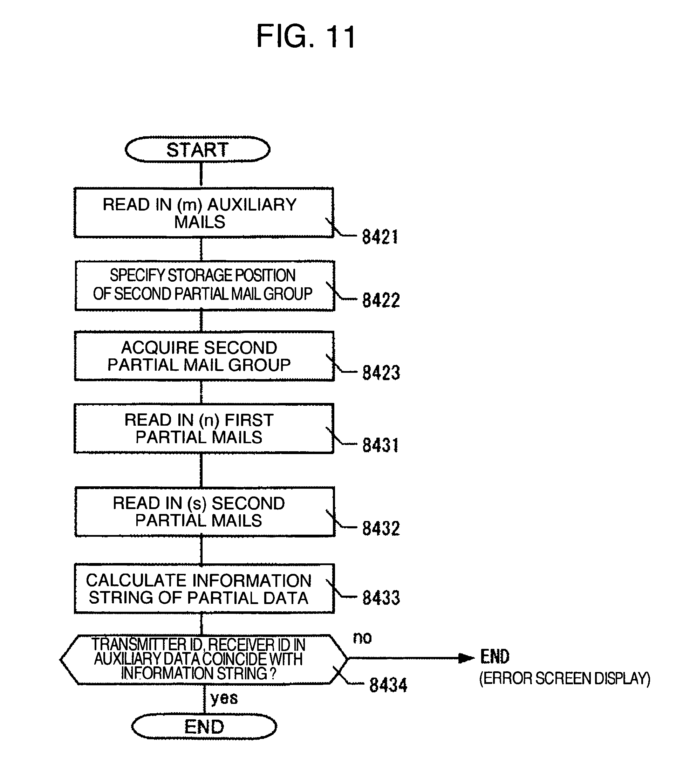

Fig. 11 shows a procedure of acquisition of the second partial mail group and tamper check performed by the transmission destination device 240.

The transmission destination device 240 performs mail read up to the number of auxiliary mails received (m in this case) and reads in the information string on each tally data contained in each auxiliary mail, information required for restoring the original mail from the partial mail such as the number of divisions, information on the storage position of the second partial mail group, and the transmitter ID, the receiver ID, the divided mail ID, and a pair data ID identifying an auxiliary mail other than that auxiliary mail (step 8421) .

The storage position of the second partial mail group is identified by the information on the storage position of the second partial mail group described in each auxiliary mail read in step 8421 (step 8422).

The identified storage position is accessed via the network 250 to acquire the second partial mail group (step 8423).

Mail read is performed up to the number of the first partial mails received (n in this case) and the tally data and the transmitter ID, the receiver ID, the divided mail ID, and the pair data ID for identifying partial data other than that partial data contained in each partial mail are read in (step 8431).

Partial mail read is performed up to the number of the second partial mails acquired (s in this case) and the tally data and the transmitter ID, the receiver ID, the divided mail ID, the pair data ID for identifying partial data other than that partial data are read in (step 8432).

A corresponding information string is calculated from the tally data in each partial mail of the first partial mail group and the second partial mail group. The calculation is performed by using the same algorithm used in step 8125 (such as Hash function) (step 8433).

It is judged whether the information string of each tally data calculated in step 8433 coincides with the information string corresponding to the tally data in each auxiliary mail read in step 8421. If they coincide, control is passed to step 844. If they do not coincide, an error screen is displayed, for example, and the processing is terminated (step 8434).

### [Transmission destination device 240: step 844]

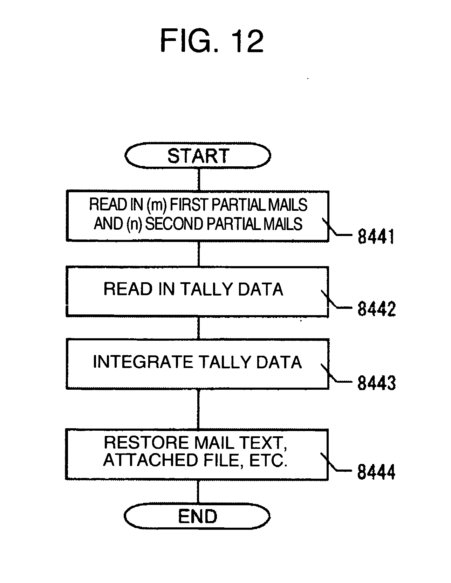

Fig. 12 shows an outline of a flow of original mail restoration by the transmission destination device 240.

Mail read is performed up to the number of the first partial mails (n in this case). Moreover, mail read is performed up to the number of second partial mails acquired in step 8423 (s in this case) (step 8411).

The tally data in each of the partial mails of the first partial mails and the second partial mails is read into the storage device (step 8442). The tally data which have been read in are integrated by using the algorithm based on the secret sharing method. The tally decryption algorithm by the secret sharing method is stored in the mail software in advance (step 8443). The integrated data (encoded string) is decoded to restore data such as the mail text and the attached file. The algorithm required for the decoding is stored in the mail software (step 8444).

It should be noted that the present embodiment has been explained as a case in which the first partial mail group is separated from the second partial mail group and the second partial mail group is stored in a single Web server. However, it is also possible to increase the number of divisions by creating a third and a fourth partial mail group, which are stored in different Web servers. In this case, the first partial mail group contains the storage position of each web server. Moreover, the first partial mail group contains the storage position of the second partial mail group and the second partial mail group contains the storage position of the third partial mail group, thereby successively containing the storage position. Furthermore, it is also possible that the first partial mail group is combined with the second partial mail group so as to identify the storage position of the third partial mail group.

It is also possible to modify the timing of read of the partial mail or omit the tamper detection step according to the system load and the mail contents.

Moreover, since the structure of the partial mail and the auxiliary mail are based on the first embodiment, it is possible to realize the first embodiment or the second embodiment according to the transmission destination device without replacing the mail software. For example, if the auxiliary mail does not contain position information (such as URL and right of access to the Web server), the processing described in the first embodiment is performed and if the position information exists, the processing described in the second embodiment is performed.

Since the storage position of the second partial mail group is described in the auxiliary mail group, acquisition of the second partial mail group is performed by the mail software and the transmission destination device and its operator can receive and display electronic data without considering the existence or position of the Web server.

Moreover, by adding the following function concerning authentication, it is possible to deliver a mail and an attached file more safely. Authentication according to an embodiment will be detailed below.

The transmission destination device 210 creates authentication data and divides it by using the secret sharing method so as to create authentication partial data (authentication partial data A and authentication partial data B). Here, the tally encryption algorithm by the secret sharing method is stored in the mail software. Moreover, the authentication data created here may be created according to a fixed ID which is prepared for each of the transmission destination device or may be created according to an ID which is created each time transmission is performed. Alternatively, it is possible to create a digital signature by a public key encryption method in the transmission source device and the transmission destination device and create authentication data according to it. Next, the transmission destination device 210 stores the authentication partial data A and transmits the authentication partial data B to the transmission destination device (upon transmission, it is preferable to encrypt the data or transmit/receive directly by using an IC card.)

When the transmission source device and the transmission destination device authenticate each other, their authentication partial data are integrated by using the algorithm based on the secret sharing method and the authentication is performed by checking whether the original authentication data can be restored.

When the Web server is used like in this embodiment, the transmission source device registers the authentication partial data A in the Web server. When the Web server is accessed from the transmission destination device for acquiring the second partial data, the access can be controlled by the authentication by using the aforementioned authentication partial data. More specifically, a processing to prompt the transmission destination device to present the authentication partial data B is performed and by using the algorithm based on the secret sharing method, integration with the authentication partial data A registered in the Web server is performed. When the original authentication data can be restored, access is permitted.

It should be noted that it is apparent that the present invention may include embodiments other than the aforementioned embodiments.

The present invention enables electronic data delivery more safely with a simple system configuration.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An electronic data delivery method for delivering electronic data by using the secret sharing method, the method comprising steps of:
dividing, by a transmission source device (210) which is a transmission source of the electronic data, the electronic data into a predetermined number of partial data;
creating, by the transmission source device (210), auxiliary data corresponding to the predetermined number of partial data and containing information indicating number information indicating a total number of the auxiliary data and the partial data;
transmitting, by the transmission source device (210), the partial data and the auxiliary data to a transmission destination device (240) as a transmission destination of the electronic data via a network;
receiving, by the transmission destination device (240), the partial data and the auxiliary data;
storing, by the transmission destination device (240), the reception data including the partial data and the auxiliary data in a storage device;
detecting, by the transmission destination device (240), presence/absence of tamper of the partial data and the auxiliary data by using the attribute data; and
restoring, by the transmission destination device (240), the electronic data from the partial data.

2. The electronic data delivery method as claimed in claim 1, wherein
the transmission source device (210) divides the electronic data into a plurality of partial data.

3. The electronic data delivery method as claimed in claim 2, wherein
the transmission source device (210) causes each of the partial data and the auxiliary data to include information for identifying other partial data or auxiliary data to be restored.

4. The electronic data delivery method as claimed in claim 1, wherein
the transmission source device (210) creates one or more auxiliary data.

5. The electronic data delivery method as claimed in claim 1, wherein
the transmission destination device (240) detects presence/absence of tamper by using the number information.

6. The electronic data delivery method as claimed in claim 5, wherein
each of the transmission source device (210) and the transmission destination device (240) stores a predetermined information string;
the transmission source device (210) inserts codes constituting the information string into a predetermined position of data for each of the partial data and the auxiliary data according to a predetermined rule; and
the transmission destination device (240) collects the codes to constitute the information string and compares it with an information string stored in advance, thereby detecting presence/absence of tamper of the partial data and the auxiliary data.

7. The electronic data delivery method as claimed in claim 1, wherein
the transmission source device (210) successively transmits the partial data and the auxiliary data at a predetermined time interval,
so as to increase the possibility that the partial data and the auxiliary data are transmitted via different communication paths.

8. The electronic data delivery method as claimed in claim 7, wherein
the transmission source device (210) transmits each of the partial data and the auxiliary data at a constant interval as the predetermined time interval.

9. The electronic data delivery method as claimed in claim 1, wherein
the transmission source device transmits a part of the plurality of divided partial data and the auxiliary data to a mediation device other than the transmission destination device (240) and the other part to the transmission destination device (240); and
the transmission destination device (240) accesses the mediation device, downloads the partial data or the auxiliary data which has been transmitted to the mediation device, and restores the electronic data from the downloaded partial data and the auxiliary data, and the partial data and the auxiliary data which have been transmitted to the transmission destination device (240).

10. An electronic data delivery system for delivering electronic data by using the secret sharing method; the system comprising:
a transmission source device (210) including:
division means for dividing the electronic data into a predetermined number of partial data by using the secret sharing method; creation means for creating auxiliary data corresponding to the predetermined number of partial data and containing information indicating number information indicating a total number of the auxiliary data and the partial data; and
transmission means for transmitting the partial data and the auxiliary data to the transmission destination device (240) as a transmission destination of the electronic data via a network; and
a transmission destination device (240) including: reception means for receiving the partial data and the auxiliary data; storage means for storing reception data containing the partial data and the auxiliary data in the storage device; detection means for detecting presence/absence of tamper of the partial data and the auxiliary data by using the auxiliary data; and restoration means for restoring the electronic data from the partial data.

11. The electronic data delivery system as claimed in claim 10, wherein
the division means divides the electronic data into a plurality of partial data.

12. The electronic data delivery system as claimed in claim 11, wherein
the transmission source device (210) further includes means for causing each of the partial data and the auxiliary data to contain information for identifying other partial data or auxiliary data as a restoration object.

13. The electronic data delivery system as claimed in claim 10, wherein
the creation means creates more than one of the auxiliary data.
